# EUROPÄISCHE PATENTSCHRIFT

(11) **EP 2 076 345 B1**
(45) Veröffentlichungstag und Bekanntmachung des Hinweises auf die Patenterteilung: **27.07.2011**
(21) Anmeldenummer: 07818490.0
(22) Anmeldetag: 27.09.2007
(51) Int. Cl.: B23B 51/04, B23B 47/34, B23C 3/32, B23C 3/36, B23C 3/28

(54) **MODULARES BOHRWERKZEUG UND VERFAHREN ZU SEINER HERSTELLUNG**
MODULAR DRILLING TOOL AND METHOD FOR THE PRODUCTION THEREOF
OUTIL DE PERÇAGE MODULAIRE ET SON PROCÉDÉ DE FABRICATION

(30) Priorität: 13.10.2006 DE 102006049088
(43) Veröffentlichungstag der Anmeldung: 08.07.2009
(73) Patentinhaber: Kennametal Inc., Latrobe, PA 15650-0231 (US)
(72) Erfinder: MERGENTHALER, Peter Karl, 91477 Markt Bibart (DE)
(74) Vertreter: FDST Patentanwälte
(86) Internationale Anmeldenummer: PCT/EP2007/008407
(87) Internationale Veröffentlichungsnummer: WO 2008/046496

(56) Entgegenhaltungen:
- EP-A- 0 750 960
- WO-A-84/00910
- DE-A1- 4 338 545
- DE-C1- 4 115 030
- GB-A- 1 338 586
- SU-A1- 715 238
- US-A- 3 836 278
- US-A- 5 685 673
- KACZMAREK H H: "STUFENWERKZEUGE-NACHSCHARFEN AUF EINER CNC-SCHLEIFMASCHINE" WERKSTATT UND BETRIEB, CARL HANSER VERLAG, MUNCHEN, DE, Bd. 121, Nr. 12, 1. Dezember 1988 (1988-12-01), Seiten 985-988, XP000046888 ISSN: 0043-2792
- SHCHEGOL'KOV N N: "METAL-CUTTING TOOLS TECHNOLOGICAL MODIFICATION OF THE TWIST DRILL CHIP GROOVE PROFILE" RUSSIAN ENGINEERING RESEARCH, ALLERTON PRESS, NEW YORK, NY, US, Bd. 20, Nr. 12, 2002, Seiten 66-70, XP001117371 ISSN: 1068-798X

## Beschreibung

Die Erfindung betrifft ein modulares Bohrwerkzeug mit den Merkmalen des Oberbegriffs gemäß Anspruch 1. Die Erfindung betrifft weiterhin ein in Anspruch 11 beschriebenes Verfahren zum Herstellen eines derartigen Bohrwerkzeuges_{.}

Modulare Bohrwerkzeuge sind in unterschiedlichen Ausführungsformen bekannt, die sich beispielsweise durch die Aufnahme von separat ausgebildeten Schneideinheiten unterscheiden. Als Schneideinheiten kommen beispielsweise eingelötete Hartmetallplättchen oder komplette Bohrerspitzen zum Einsatz. Darüber hinaus sind wechselbare Schneideinheiten bekannt, wie Wendeschneidplatten, die an dem Tragkörper des Bohrwerkzeuges mittels Schrauben gehalten sind oder Kassetten mit Wendeschneidplatten, die über eine formschlüssige Aufnahme mit dem Tragkörper verbunden werden. Weiterhin sind austauschbare Bohrerspitzen bekannt, die am Tragkörper beispielsweise mit Schrauben oder klemmend oder formschlüssig befestigt sind. All diesen modularen Bohrwerkzeugen ist die Aufteilung in die Schneideinheit und den Tragkörper gemeinsam. Der Tragkörper weist einen vorderen Bereich mit Spannuten und eines Schaftbereich zur Aufnahme des Bohrwerkzeuges in eine Spannvorrichtung einer Bearbeitungsmaschine auf.

Aus der GB 13 38 586 ist ein Bohrwerkzeug gemäß dem Oberbegriff des Anspruchs 1 zu entnehmen. Bei diesem Bohrwerkzeug verläuft die Spannut zu einer schneidenseitigen Auslaufkante konvex gekrümmt.

Ein weiteres Bohrwerkzeug ist aus der DE 195 22 836 A1 bekannt. Bei diesem als Bohrwerkzeug mit Wendeschneidplatten ausgeführten Werkzeug sind eine Innenspannut und eine Außenspannut so ausgestaltet, dass sie im mittleren bis hinteren Bereich des Werkzeuges ineinander übergehen. Bei diesem Werkzeug weist die Spannut an beiden Wandungen Versteifungswülste auf.

Durch Schwankungen der Parameter beim Bohrprozess kommt es zur Bildung unterschiedlicher Spanformen. Neben den gewünschten Bruchspanstücken können auch unerwünschte Schraubenspäne und Schraubenbruchspäne entstehen. Diese Spananteile verursachen bei ihrem Abtransport von der Schneide des Bohrwerkzeuges über die Spannut immer wieder einen Kontakt mit der Bohrungswand, wodurch Riefen entstehen, die die Oberflächengüte der erzeugten Bohrung beeinträchtigen.

Darüber hinaus kommt es immer wieder dazu, dass sich an der Auslaufkante Späne zwischen der Bohrungswand und dem Bohrerrücken verklemmen und damit zu einer erhöhten Torsionsbelastung des Bohrerkörpers führen. In dieser Situation kommt es auch zu einer erhöhten thermischen Belastung des Bohrers, da mit den Spänen auch die beim Schneiden entstehende Wärme vom Bohrungsgrund abgeführt wird. In Extremfällen kommt es dabei zum Verschweißen eines solchen eingeklemmten Spanes mit der Bohrungswand.

Der vorliegenden Erfindung liegt die Aufgabe zugrunde, ein modulares Bohrwerkzeug sowie ein Verfahren zu seiner Herstellung mit einer im Hinblick auf den Spantransport besonders geeigneten Spannut anzugeben.

Diese Aufgabe bezüglich des Bohrwerkzeuges wird erfindungsgemäß gelöst durch die Merkmale des Anspruchs 1. Das Bohrwerkzeug ist danach modular ausgebildet und weist einen im Wesentlichen kreiszylindrischen Tragkörper mit einem Tragkörperradius und einer an dem Tragkörper ausgebildeten Aufnahme für die Schneideinheit auf. Der Tragkörper umfasst eine entlang einer Spannut verlaufende Auslaufkante. Die Spannut verläuft zu der Auslaufkante hin konvex gekrümmt, so dass - im Querschnitt senkrecht zur Tragkörperlängsachse gesehen - eine Hohlkehle gebildet ist und zwischen einer Spannuttangente an der Auslaufkante und einer am Nutgrund im Bereich der Hohlkehle an einem Tangentenpunkt tangierenden Radialen ein spitzer Vorlaufwinkel ausgebildet ist. Die Begrenzungswand der Spannut hat hierbei eine J-förmige Kontur, setzt sich also zusammen etwa aus einem Halbkreisbogen, an dessen einer Seite sich ein geradliniger Wandabschnitt anschließt. Insgesamt weißt daher die Spannut eine unsymmetrische Gestaltung insoweit auf, dass die Spannut auf ihrer einen Seite einen geradlinigen Wandabschnitt und auf ihrer anderen Seite einen lediglich gebogenen Wandabschnitt aufweist. Der gebogene Wandabschnitt bildet die Hohlkehle und den spitzen Vorlaufwinkel aus. Der geradlinig verlaufende Wandabschnitt liegt also zu der Auslaufkante in Drehrichtung gegenüber und verläuft geradlinig in Richtung der einen Bohrerrücken bildenden Mantelfläche des Tragkörpers aus. Dies ermöglicht, die Spannut durch einfaches Einfräsen entlang diese geradlinigen Auslaufs in den Tragkörper zu erzeugen. Die J-förmige Ausgestaltung wird herstellungstechnisch also dadurch erreicht, dass die Nuten mit Hilfe eines Fräsers eingebracht werden, beispielsweise Kugelkopffräsers oder einer Frässcheibe. Der Fräser wird hierbei nicht radialer Richtung sondern mehr tangential an den zu bearbeitenden Rohling herangeführt wird. Unter tangentialem Heranführen wird hierbei verstanden, dass die Fräsermitte nicht in radialer Richtung auf die Tragkörperlängsachse zugeführt wird, sondern dass vielmehr die Fräsermitte parallel jedoch beabstandet zu einer Radialen am Rohling angesetzt ist.

Unter Spannuttangente wird hierbei die senkrecht zur Tragkörperlängsachse orientierte Tangente zur Spannutwand am Auslaufeck verstanden, an dem die Spannutwand auf die Auslaufkante trifft. Die Radiale verläuft ebenfalls senkrecht zur Tragkörpedängsachse und tangiert die Spannutwand in deren tiefsten Punkt, der hier als Tangentenpunkt bezeichnet wird.

Die sich daraus ergebende sichelförmige Ausgestaltung der durch die Spannut gebildeten Spankammer führt ähnlich wie GB13 38 586 zu einer verbesserten Spanführung, da aufgrund des spitzen Vorlaufwinkels eine Art Keil ausgebildet ist, der den Span von der Bohrungswand quasi abschabt. Zugleich wird durch die konvexe Krümmung und die dadurch gebildete Hohlkehle der Span sicher in die Spannut hinein geführt und dort gehalten. Die Gefahr eines Einklemmens eines Spans zwischen dem Bohrwerkzeug und der Bohrungswand ist daher vermindert. Die Krümmung der Spannut unterstützt zudem das Formen des Spans, damit dieser leicht und zuverlässig in der Spannut abgeführt werden kann. Gleichzeitig wird durch die J-förmige Ausgestaltung der Span zuverlässig in der Spankammer gehalten.

Weiterhin weist der Tragkörper einen in Tragkörperlängsrichtung verlaufenden vorderen Bereich sowie einen sich daran anschließenden Auslaufbereich auf. Der Auslaufbereich dient dem Auswurf des Spanmaterials. Im Auslaufbereich nimmt der Vorlaufwinkel in Tragkörperlängsrichtung auf den Tragkörperschaft hin kontinuierlich und stetig ab, was zu einer ebenfalls kontinuierlich abnehmenden Hohlkehltiefe führt. Durch diese Abnahme der Hohlkehltiefe kann das Spanmaterial frei aus der Nut auslaufen. Bevorzugt nimmt hierbei der Vorlaufwinkel in Tragkörperlängsrichtung vom Ende des vorderen Bereiches über den Auslaufbereich hinweg bis auf zumindest 0° ab. Gemäß einer zweckdienlichen Ausgestaltung liegt der Vorlaufwinkel im Bereich zwischen 40° bis 70°. Dadurch wird eine besonders ausgeprägte und sichere Spanführung innerhalb der Spannut erzielt.

Vorteilhafterweise ist die Spannut im Bereich der Hohlkehle entlang einer Kreisbahn mit einem Krümmungsradius ausgebildet. Eine solche Kreisbahn wird insbesondere durch einen Fräser erzeugt, dessen Radius im Wesentlichen dem Krümmungsradius der Hohlkehle entspricht. Fertigungstechnisch bedingt ist der Radius der Hohlkehle etwas größer als der Radius des Fräsers. Somit ist die Form der Spannut in einfacher Weise durch die Wahl eines passenden Werkzeuges herstellbar und der an dieser Wandung ausgebildete Radius führt zu einer verbesserten Formung der abzuführenden Späne.

In vorteilhafter Ausgestaltung weist die Spannut einen Durchmesser zwischen dem 0,4-fachen bis 0,6-fachen des Tragkörperradius auf. Diese Dimensionierung hat sich als vorteilhaft erwiesen, wobei gleichzeitig der verbleibende Querschnitt des Tragkörpers geeignet ist, die auftretenden Kräfte und Momente aufzunehmen.

Bevorzugt weist die Hohlkehle eine Kehlbreite zwischen dem 0,6-fachen bis 1-fachen des Krümmungsradius und damit zwischen dem 0,3-fachen bis 0,5-fachen des Durchmessers des verwendeten Fräsers auf. Vorteilhafter Weise weist die Hohlkehle zugleich eine Kehltiefe im Bereich des 0,3-fachen bis 0,8-fachen des Krümmungsradius auf. Die Kehlbreite ist hierbei definiert durch den Abstand zwischen dem Tangentenpunkt des Nutgrundes und der Projektion der Auslaufkante auf die Radiale. Die Kehltiefe ist dabei der Abstand der Radialen durch den Tangentenpunkt von der Auslaufkante. Eine derart ausgeformte Hohlkehle führt die Späne über den gesamten Verlauf besonders gut im Spannutquerschnitt.

Bohrwerkzeuge sind durch ihre große Länge bezogen auf ihren Durchmesser und den durch die Spannut reduzierten Querschnitt anfällig für Verformungen, speziell Durchbiegung, aufgrund der Vorschubkräfte während eines Arbeitsganges. Die daraus resultierenden Schwingungen vermindern die Qualität der Bohrung. Deshalb weist der Auslaufbereich in bevorzugter Ausführung eine Länge zwischen dem 1,0-fachen und 2,0-fachen des Krümmungsradius auf. Diese Länge gewährleistet einen freien Auslauf des Spanmaterials ohne übermäßige Verlängerung des Tragkörpers.

In zweckdienlicher Ausgestaltung weist in einem mittleren Teilbereich des Auslaufbereichs der Spannut gegenüberliegende Wandbereiche auf, die im Anfangsbereich parallel verlaufen und durch eine Halbkreisbahn verbunden sind. Diese Nutform ist in einfacher Weise durch den für den vorderen Bereich eingesetzten Fräser zu erzeugen.

Die auf das Herstellungsverfahren bezogene Aufgabe wird weiterhin erfindungsgemäß gelöst durch die Merkmale des Anspruchs 11. Die im Hinblick auf das Bohrwerkzeug angeführten Vorteile und bevorzugten Ausgestaltungen sind sinngemäß auch auf das Verfahren zu übertragen.

Zur Herstellung des Bohrwerkzeugs ist hierbei vorgesehen, dass die Spannut mit Hilfe eines Fräsers derart bearbeitet wird, dass die Spannut im Querschnitt senkrecht zur Tragkörperlängsachse gesehen zur Auslaufkante hin konvex verläuft und eine Hohlkehle gebildet wird derart, dass zwischen einer Spannuttangente an der Auslaufkante und einer den Nutgrund im Bereich der Hohlkehle an einem Tangentenpunkt tangierenden Radialen ein spitzer Vorlaufwinkel ausgebildet wird.

In dem Auslaufbereich wird der Fräser derart verschwenkt, dass der Vorlaufwinkel in Richtung der Tragkörperlängsachse kontinuierlich abnimmt und insbesondere bis auf 0° reduziert wird. Durch diese Maßnahme wird die durch die Hohlkehle gebildete sichelförmige Ausgestaltung der Spankammer auf einen geraden Auslauf überführt. D.h. zumindest im Endbereich des Auslaufbereichs verläuft die Spannutwand geradlinig aus, so dass der Span problemlos aus der Spannut austreten kann. Dabei wird der Fräser in einfacher Weise geeignet verschwenkt. Für die Änderung der Querschnittsgeometrie ist dabei kein Werkzeugwechsel erforderlich, so dass ein schnelles und kostengünstiges Ausbilden der Spannutgeometrie in nur einem Arbeitsschritt ermöglicht ist. Vorteilhaft wird die Spannut in einem kontinuierlichen Arbeitsgang im Anschluss an das Fräsen im vorderen Bereich in dem sich an den vorderen Bereich anschließenden Auslaufbereich bearbeitet .

Nachfolgend wird ein Ausführungsbeispiel der Erfindung anhand einer Zeichnung näher erläutert. Darin zeigen jeweils in schematischen Darstellungen:
- Fig. 1: in einer perspektivischen Darstellung eines Tragkörpers eines modularen Bohrwerkzeuges,
- Fig. 2: eine Seitenansicht des Tragkörpers gem. Fig. 1,
- Fig. 3: einen Querschnitt senkrecht zur Tragkörperlängsachse entlang der Schnittlinie III-III in Fig. 2,
- Fig. 4: eine Aufsicht auf einen Schnitt senkrecht zur Tragkörperlängsachse ent- lang der Schnittlinie IV-IV in Fig. 2, und
- Fig. 5: eine stark schematisierte Stirnansicht auf den Tragkörper mit eingezeich- netem Fräserkopf in unterschiedlichen Frässtellungen zur Erläuterung des Verfahren zum Fräsen der Spannut.

Einander entsprechende Teile sind in allen Figuren mit gleichen Bezugszeichen versehen.

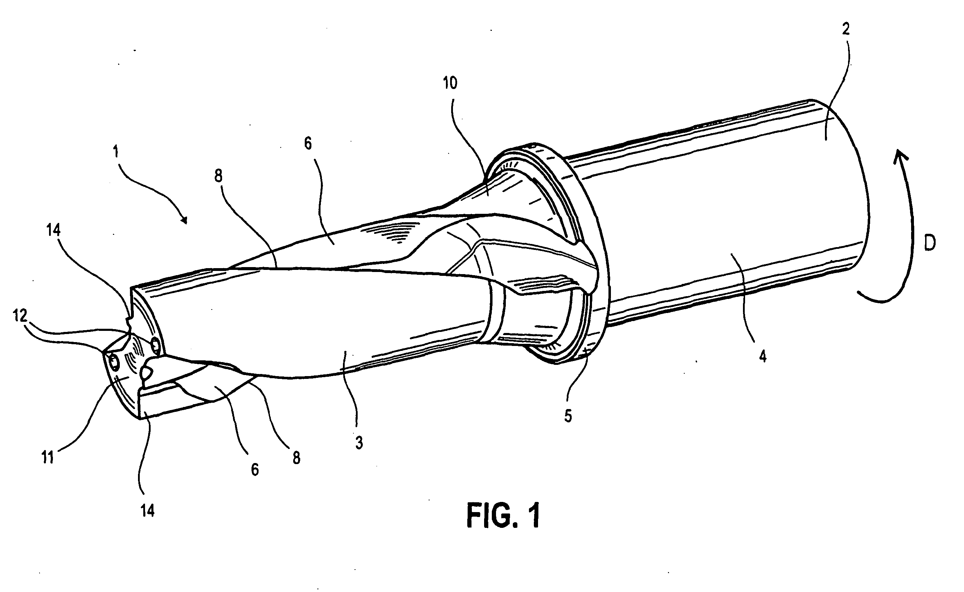

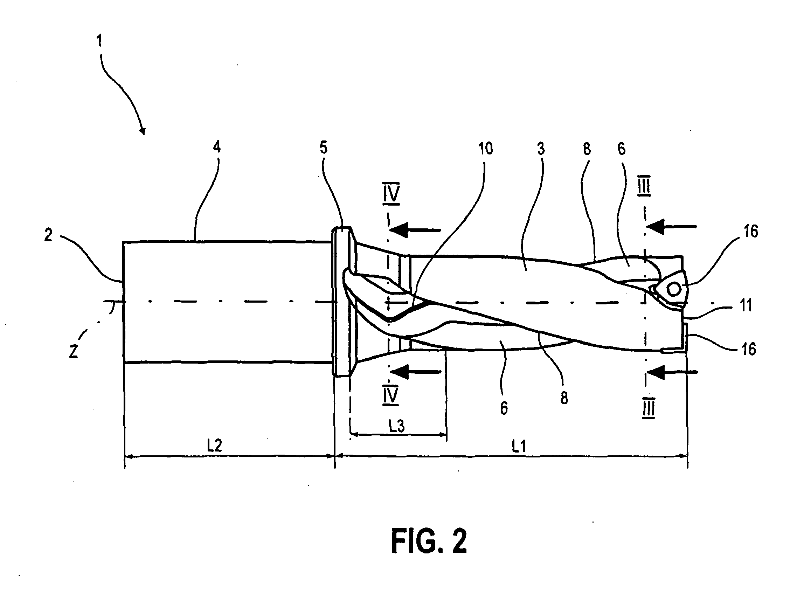

Fig. 1 zeigt einen Tragkörper eines modularen Bohrwerkzeugs 1 in einer perspektivischen Ansicht ohne Schneideinheit. Der Tragkörper 2 ist unterteilt in einen vorderen Bereich 3 und einen Schaftbereich 4. Beide Bereiche sind durch eine einen Anlagebund bildende Kragung 5 getrennt. Der vordere Bereich 3 weist im Ausführungsbeispiel zwei Spannuten 6 auf, die im vorderen Bereich 3 einander diametral gegenüberliegend wendelförmig verlaufen. In Bohrer-Drehrichtung D gesehen schließt sich endseitig an die Spannut 6 jeweils eine Auslaufkante 8 an, die korrespondierend zur Spannut 6 ebenfalls wendelförmig verläuft. Zum Schaftbereich 4 hin ist ein Auslaufbereich 10 vorgesehen, in dem die Spannut 6 entlang der Kragung 5 aus dem Tragkörper 2 ausläuft. Der Tragkörper 2 weist weiterhin korrespondierend zu den Spannuten 6 je eine Kühlmittelbohrung 12 auf, deren Öffnungen an der Stirnseite 11 des Tragkörpers 2 angeordnet sind. Im vorderen Stirnbereich des Tragkörpers 2 sind im Ausführungsbeispiel zwei Platten sitze 14 zur Aufnahme von in Fig. 1 nicht dargestellten Wendeschneidplatten 16 (vgl. Fig. 2) ausgebildet.

Die Wendeschneidplatten 16 bilden jeweils eine Schneideinheit des modularen Bohrwerkzeugs 1. Alternativ zu Wendeschneidplatten 16 können als Schneideinheiten auch insbesondere austauschbare Bohrerspitzen vorgesehen sein. Durch den modularen Aufbau besteht die kostengünstige Möglichkeit, für die Schneideinheit hochspezialisierte Werkstoffe einzusetzen, die den hohen Belastungen bei der spanenden Bearbeitung standhalten, und gleichzeitig für den Tragkörper geeignete andere und kostengünstigere Werkstoffe einzusetzen. Durch die Austauschbarkeit der Schneideinheiten brauchen bei Verschlissenen Schneiden auch nur die Schneideinheiten ausgetauscht zu werden.

Fig. 2 zeigt das Bohrwerkzeug 1 in einer Seitenansicht. An dem Tragkörper 2 sind die zwei Wendeschneidplatten 16 dargestellt, die radial versetzt zueinander im jeweiligen Plattensitz 14 befestigt sind. Die Wendeschneidplatten 16 ragen über die Stirnseite 11 hinaus. Die radial innere Wendeschneidplatte 16 erstreckt sich über die Tragkörperlängsachse Z hinaus und überlappt in radialer Richtung zugleich die äußere Wendeschneidplatte 16, wodurch beide Wendeschneidplatten 16 einen sich überlappenden Arbeitsbereich aufweisen. Die radial innere und radial äußere Wendeschneidplatte 16 sind bei Bedarf unterschiedlich ausgebildet.

Die Länge des gesamten Bohrwerkzeuges 1 ergibt sich aus einer Einspannlänge L2 des Schaftbereiches 4 und einer effektiven Auskraglänge L1. Der sich an den vorderen Bereich 3 anschließende Auslaufbereich 10 weist die Länge L3 auf. Dabei entspricht die für das Bohren aktive Länge des vorderen Bereiches 3 einer Bohrungstiefe, für die das Bohrwerkzeug vorgesehen ist. Diese Bohrungstiefe wird üblicherweise in Vielfachen des Tragkörperdurchrnessers angegeben. Die aktive Länge des vorderen Bereichs entspricht im Wesentlichen der Differenz zwischen der effektiven Auskraglänge L1 und der Länge L3 des Auslaufbereichs 10.

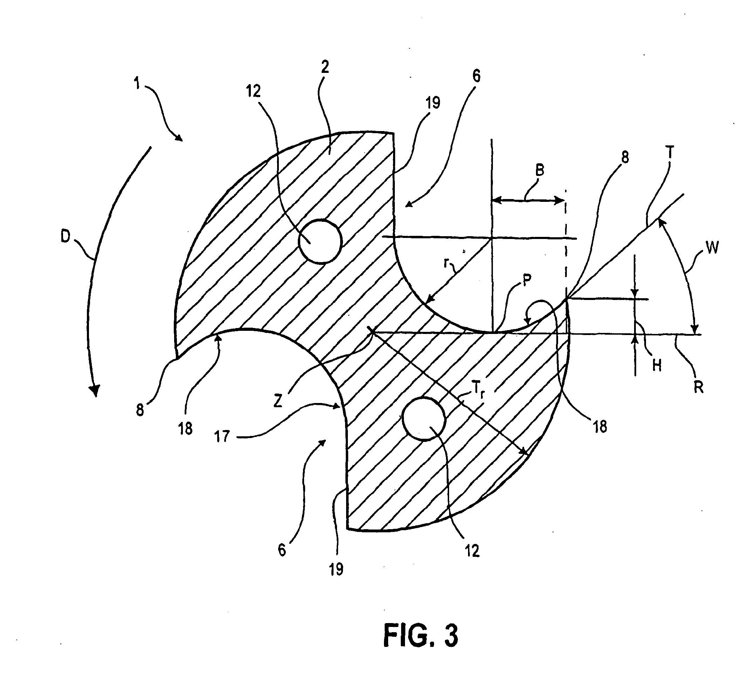

Während über die Länge des vorderen Bereichs 3 die Spannut 6 eine zumindest ihm Wesentlichen gleichbleibende Spannutgeometrie aufweist verändert diese sich im Verlauf des Auslaufbereichs 10 kontinuierlich. Unter im Wesentlichen gleichbleibende Geometrie wird hierbei verstanden, dass die nachfolgend zu Fig. 3 erläuterte Grundgeometrie erhalten bleibt bis auf evtl. Änderungen der einzelnen Abmessungen beispielsweise aufgrund einer Kernverjüngung in Längsrichtung des Bohrwerkzeugs 1. Die Spannut 6 im vorderen Bereich 3 ist hierbei für eine gute Spanformung und Spanableitung ausgebildet, insbesondere derart, dass der Span sicher in der Spannut 6 gehalten wird und ein Verklemmen des Spans zwischen einer Bohrungswand und dem Bohrerrücken vermieden ist. Im Auslaufbereich 10 hingegen ist die Spannut 6 dahingehend ausgebildet, dass der Span aus der Spannut 6 problemlos austreten kann.

Fig. 3 zeigt eine Querschnittsfläche entlang der Schnittlinie III-III gemäß Fig. 2. Innerhalb des Tragkörpers 2 mit einem Tragkörperradius Tᵣ sind die beiden Kühlmittelbohrungen 12 angeordnet. Die Spannut 6 ist begrenzt durch eine etwa J-förmige Spannutwand 17. Diese weist einen kreisbogenförmigen Wandabschnitt mit einem Radius r auf. Dieser kreisbogenförmige Wandabschnitt läuft auf der einen Seite zum Bohrerrücken aus und grenzt an der Auslaufkante 8 an.

Die Spannut 6 bildet dadurch zur Auslaufkante 8 hin eine Hohlkehle 18 aus und weist im Bereich der Hohlkehle 18 einen sichelförmigen Verlauf auf. Die Sichelspitze wird durch die Auslaufkante 8 gebildet. Zwischen einer Spannuttangente T und einer Radialen R ist hierbei ein Vorlaufwinkel W ausgebildet. Die Spannuttangente T ist die Tangente des kreisbogenförmigen Wandabschnitts im Auslaufpunkt des Wandabschnitts an der Auslaufkante 8. Die Radiale R ist gebildet durch eine Gerade, die durch den Mittelpunkt (Tragkörperlängsachse Z) verläuft und den Nutgrund im Bereich der Hohlkehle tangiert. Der Berührungspunkt der Radialen R im Bereich des Nutgrundes wird als Tangentenpunkt P bezeichnet. Die Hohlkehle 18 weist eine Kehltiefe H sowie eine Kehlbreite B auf. Die Kehltiefe H ist definiert als der Abstand der Radialen R zur Auslaufkante 8, d.h. die Kehltiefe H entspricht - im Querschnitt gesehen - der kürzesten Strecke zwischen der Radialen R und der Auslaufkante 8, also dem Eckpunkt zwischen der Spannutwand und dem Bohrerrücken. Die Kehlbreite B ist hierbei definiert durch den Abstand zwischen der den Nutgrund tangierenden Radialen R und einer Projektion der Auslaufkante auf die Radiale R. Die Kehlbreite B ist daher der Abstand zwischen dem Tangentenpunkt P und einer durch den Eckpunkt (Auslaufkante 8) zwischen der Spannutwand und dem Bohrerrücken verlaufenden Lotrechten zur Radialen R.

Die Spannutwand läuft zur Auslaufkante 8 hin spitz aus, so dass ein in etwa keilförmiger Wandungsbereich ausgebildet ist. Der Vorlaufwinkel W liegt hierbei in einem Bereich zwischen etwa 40° und 70°. Durch diese sehr spitze Ausgestaltung wird zuverlässig die Gefahr reduziert, dass ein Span sich zwischen einer Bohrlochwand und dem Bohrerrücken klemmt. Vielmehr wird der Span durch die keil- oder sichelförmige Ausgestaltung von der Bohrlochwand abgeschabt und in der sichelförmigen Hohlkehle 18 gefangen. Zugleich ist durch die Krümmung der Spannutwand angrenzend an die Auslaufkante 8 eine gute Spanformwirkung erzielt. Die Hohlkehle 18 weist hierzu einen Krümmungsradius auf, der insbesondere im Bereich zwischen dem 0,4- bis 0,6-fachen des Tragkörperradius Tᵣ liegt. Um den Span sicher und zuverlässig in der Spannut 6 zu halten, liegt die Hohlkehlenbreite B etwa im Bereich zwischen dem 0,6 bis zum 1 ,0-fachen des Krümmungsradius r. Zugleich beträgt die Hohlkehlentiefe H etwa das 0,3- bis zum 0,8-fachen des Krümmungsradius r. Insgesamt ist durch diese SpannutGeometrie ein zuverlässiger Spanabtransport erzielt.

Der der Auslaufkante 8 in Drehrichtung D gegenüberliegende Wandabschnitt 19 der Spannut 6 ist für die Spanformung und dem Spanabtransport von geringerer Bedeutung und im Ausführungsbeispiel als ein gerader Wandabschnitt 19 ausgebildet. Ausgehend von der Auslaufkante 8 über den kreisbogenförmigen Wandabschnitt im Bereich der Hohlkehle 18 erstreckt sich der gerade Wandabschnitt 19 bis zum Bohrerrücken des Tragkörpers 2.

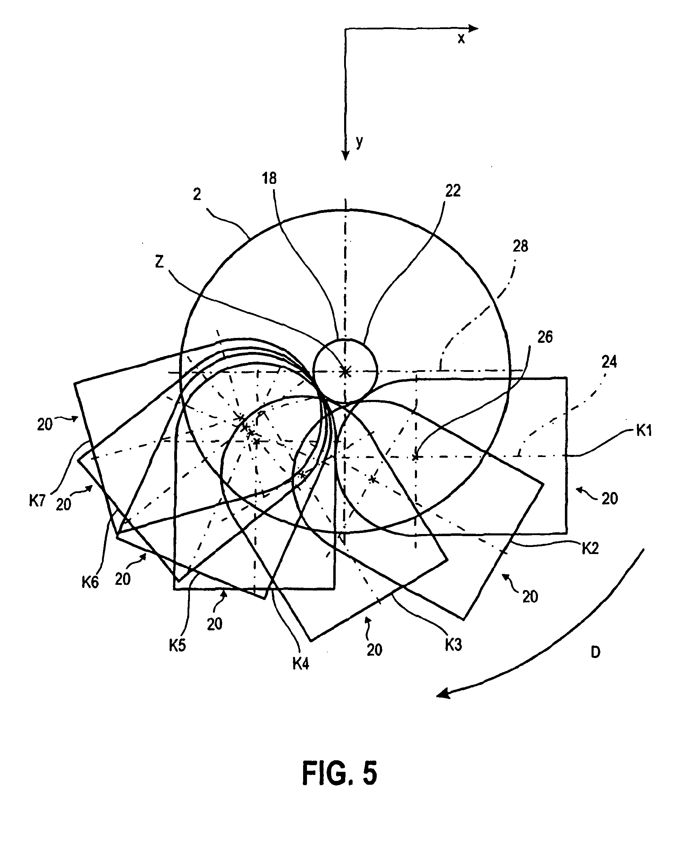

Die hier beschriebene Spannutgeometrie lässt sich in einfacher und kostengünstiger Weise insbesondere in einem einstufigen Bearbeitungsvorgang mit Hilfe eines Fräsers, insbesondere eines Kugelkopffräsers erzeugen. Es sind keine aufwändigen Schleifvorgänge oder ein mehrfaches Ansetzen eines Bearbeitungswerkzeuges erforderlich. Vielmehr wird die Spannutgeometrie im Wesentlichen durch die Geometrie eines Fräskopfes 20 (vgl. Fig. 5) des Kugelkopffräsers bestimmt. Der Krümmungsradius r der Hohlkehle 18 entspricht daher im Wesentlichen auch dem Radius des Kugelkopffräsers.

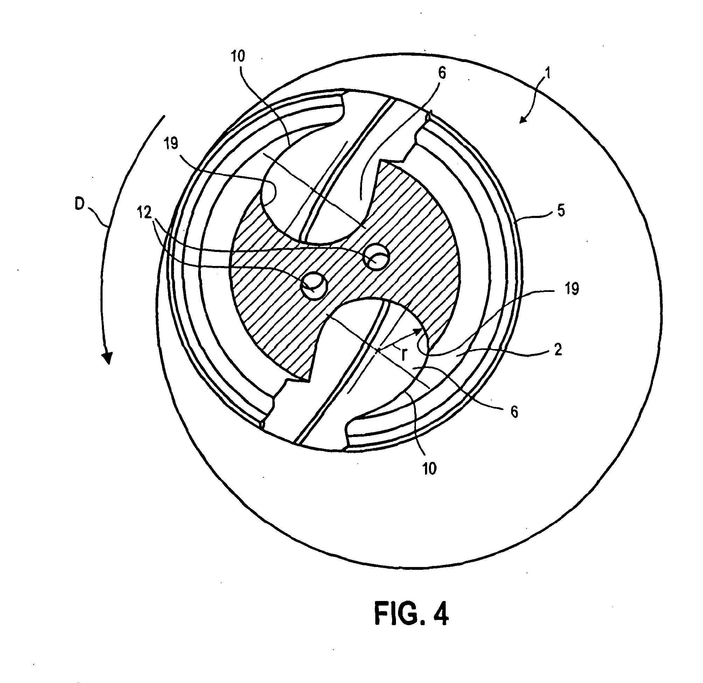

Anhand von Fig. 4 ist die Geometrie der Spannut 6 im Auslaufbereich 10 zu erkennen. Während die in Fig. 3 gezeigte Grundgeometrie mit der Hohlkehle 18 und dem gegenüberliegend zur Auslaufkante 8 geradlinig auslaufenden Wandabschnitt 19 über den vorderen Bereich 3 hinweg konstant ist, verändert sich die Geometrie über den Auslaufbereich 10 insbesondere kontinuierlich.

Die Spannut 6 ist im Auslaufbereich 10 erweitert und in die Kragung 5 hinein ausgeformt. Im Auslaufbereich 10 nimmt die Kehltiefe H zunehmend ab, bis schließlich am Ende des Auslaufbereichs 10 ein geradliniger Auslauf ausgebildet ist. Der Vorlaufwinkel W ist daher auf 0° reduziert und kann u.U. auch negative Werte einnehmen. Der Span wird daher nicht mehr in der Spannut 6 gefangen gehalten, sondern kann aus dieser problemlos heraustreten.

Am gegenüberliegenden Wandabschnitt 19 ist am Ende des Auslaufbereichs 10 nunmehr eine Hohlkehle ausgebildet und der Wandabschnitt 19 verläuft entlang einer gekrümmten Linie mit dem Krümmungsradius r.

Diese Geometrie im Auslaufbereich 10 wird in einfacher Weise durch ein definiertes Verschwenken des Fräsers erzeugt. Das Fräsverfahren zur Erzeugung der Spannut 6 wird anhand von Fig. 5 erläutert, aus der unterschiedliche mit K1 - K7 bezeichnete Stellungen des Fräskopfes 20 eines Kugelkopffräsers zu entnehmen sind. Der Fräskopf 20 weist einen Radius auf, der dem Krümmungsradius r entspricht. Die Tragkörperlängsachse Z bildet die z-Richtung und die Zeichnungsebene die x-y-Ebene des eingezeichneten Koordinatensystems.

Für die Herstellung des Tragkörpers 2 wird ein geeignetes Rundmaterial vor dem in Fig. 5 dargestellten Bearbeitungsgang auf das erforderliche Außenmaß abgedreht. Dabei wird zwischen dem als vorderen Bereich 3 und dem als Schaftbereich 4 vorgesehenen Abschnitt des Tragkörpers 2 eine Kragung 5 erzeugt. Ein so gefertigtes Halbzeug für einen Tragkörper 2 wird zum Fräsen der Spannuten 6 mit dem Schaftbereich eingesspannt, so dass der zu fertigende vordere Bereich 3 bearbeitet werden kann. Mit dem Fräskopf 20 wird in den Tragkörper 2 wie nachfolgend beschrieben gefräst, so dass je Bearbeitungsgang eine Spannut 6 mit den geforderten geometrischen Eigenschaften erzeugt wird.

Dazu wird mit dem Fräskopf 20 von der Stirnseite 11 des Tragkörpers 2 ausgehend in diesen hinein gefräst, wobei der Abstand der Fräserlängsachse 24 zur Tragkörperlängsachse Z kleiner als der Tragkörperradius Tᵣ ist, bis der Fräskopf 20 einen Kemkreis 22 des Tragkörpers 2 tangiert. In dieser Position (K1) wird der Fräserkopf 20 in einer Vorschubbewegung in z-Richtung auf den Schaftbereich 4 zu verfahren. Gleichzeitig wird der Tragkörper 2 in Drehrichtung D gedreht, so dass die wendelförmige Spannut 6 mit konstanter Steigung und konstantem Vorlaufwinkel W ausgebildet wird. Der so erzeugte vordere Bereich 3 der Spannut 6 hat eine Länge, die der für das Bohrwerkzeug 1 vorgesehenen Bohrtiefe entspricht. Während der Bearbeitung des vorderen Bereichs 3 nimmt der Fräskopf 20 bezüglich des Tragkörpers 2 die in Fig. 5 mit K1 bezeichnete Relativposition ein.

Die hier beschriebenen speziellen Bewegungen des Fräskopfes 20 bzw. des Tragkörpers 1 entsprechen dem bevorzugten und einfach anzusteuernden Bewegungsablauf. Die Bewegungen können jedoch auch durch geeignete Ansteuerung des jeweiligen anderen Teils ausgeführt werden. Entscheidend ist die relative Positionierung und Bewegung des Fräskopfes 20 zu dem Tragkörper 2.

Für die Erzeugung der Spannut 6 im Auslaufbereich 10 wird der Fräskopf 20 mit seiner Längsachse 24 in der xy-Ebene in vorher berechneter Weise um Z gedreht. Der Fräskopf 20 wird daher quasi auf dem Kernkreis 22 abgerollt. Hierzu wird der Fräskopf 20 um eine parallel zur z-Richtung orientierte Drehachse 26 gedreht. Gleichzeitig erfolgt ein Vorschub in z-Richtung und der Tragkörper 2 wird in Drehrichtung D weitergedreht. Der Fräskopf 20 durchläuft dabei die Positionen K1 bis K7. Die Tiefe der Spannut 6 bleibt dabei unverändert.

Während in der Position K1 die Fräserlängsachse 24 parallel zu einer Mittenebene 28 des Tragkörpers 2 orientiert ist ist sie in einem mittleren Bereich des Auslaufbereichs 10 senkrecht zur Mittenebene 28 (etwa Position K4) orientiert und schließt am Ende des Auslaufbereichs 10 einen stumpfen Winkel von etwa 160° zur Mittenebene 28 ein (Position K7). Die Mittenebene 28 ist im Ausführungsbeispiel durch eine Ebene definiert, die parallel zu dem geradlinig verlaufenden Wandabschnitt 19 am Ende des vorderen Bereichs 3 und zu Beginn des Auslaufbereichs 10 orientiert ist.

Aus der Position K7 wird der Fräskopf 20 in Richtung seiner Längsachse 24 aus dem Tragkörper 2 heraus gefahren. Der Bearbeitungsgang ist damit abgeschlossen.

## Patentansprüche

1. Modulares Bohrwerkzeug (1) mit einem Tragkörper (2) und einer an diesem befestigbaren Schneideinheit (16), wobei der Tragkörper (2) entlang einer Tragkörperlängsachse (Z) verläuft, im Wesentlichen kreiszylindrisch mit einem Tragkörperradius (Tᵣ) ausgebildet ist und eine Spannut (6) sowie eine entlang der Spannut verlaufende Auslaufkante (8) aufweist, wobei die Spannut (6) zur Auslaufkante (8) hin konvex gekrümmt verläuft,
**dadurch gekennzeichnet,**
**dass** ein der Auslaufkante (8) gegenüberliegender Wandabschnitt (19) der Spannut (6) geradlinig ausläuft, so dass - im Querschnitt senkrecht zur Tragkörperlängsachse (Z) gesehen - die Spannut (6) durch eine J-förmige Spannutwand (17) begrenzt und eine Hohlkehle (18) gebildet ist, so dass zwischen einer Spannuttangente (T) an der Auslaufkante (8) und einer den Nutgrund im Bereich der Hohlkehle an einem Tangentenpunkt (P) tangierenden Radialen (R) ein spitzer Vorlaufwinkel (W) ausgebildet ist und wobei der Tragkörper (2) einen in Richtung der Tragkörperlängsachse (Z) verlaufenden vorderen Bereich (3) und einen sich daran anschließenden Auslaufbereich (10) aufweist, wobei im Auslaufbereich (10) der Vorlaufwinkel (W) in Richtung der Tragkörperlängsachse (Z) kontinuierlich abnimmt.

2. Modulares Bohrwerkzeug (1) nach Anspruch 1,
**dadurch gekennzeichnet,**
**dass** der Vorlaufwinkel (W) zwischen 40° und 70° beträgt.

3. Modulares Bohrwerkzeug (1) nach Anspruch 1 oder 2,
**dadurch gekennzeichnet,**
**dass** die Spannut (6) im Bereich der Hohlkehle (18) entlang einer Kreisbahn mit einem Krümmungsradius (r) verläuft.

4. Modulares Bohrwerkzeug (1) nach Ansprüchen 1 bis 3,
**dadurch gekennzeichnet,**
**dass** der Krümmungsradius (r) etwa zwischen dem 0,4-fachen bis 0,6-fachen des Tragkörperradius (Tᵣ) liegt.

5. Modulares Bohrwerkzeug (1) nach einem der Ansprüche 1 bis 4,
**dadurch gekennzeichnet,**
**dass** die Hohlkehle eine Kehlenbreite (B) aufweist, die etwa zwischen dem 0,6-fachen bis 1,0-fachen des Krümmungsradius (r) liegt und definiert ist durch den Abstand zwischen dem Tangentenpunkt (P) und einer Projektion der Auslaufkante (8) auf die Radiale (R).

6. Modulares Bohrwerkzeug (1) nach einem der Ansprüche 1 bis 5,
**dadurch gekennzeichnet,**
**dass** die Hohlkehle eine Kehltiefe (H) etwa im Bereich des 0,3-fachen bis 0,8-fachen des Krümmungsradius (r) aufweist, wobei die Kehltiefe (H) bestimmt ist durch den Abstand zwischen der Auslaufkante (8) und der Radialen (R).

7. Modulares Bohrwerkzeug (1) nach einem der vorhergehenden Ansprüche,
**dadurch gekennzeichnet,**
**dass** im Auslaufbereich (10) der Vorlaufwinkel (W) bis auf zumindest 0° abnimmt.

8. Modulares Bohrwerkzeug (1) nach einem der vorhergehenden Ansprüche und Anspruch 3
**dadurch gekennzeichnet,**
**dass** der Auslaufbereich (10) eine Länge zwischen dem 1,0-Fachen und 2,0-Fachen des Krümmungsradius (r) aufweist.

9. Modulares Bohrwerkzeug (1) nach einem der vorhergehenden Ansprüche,
**dadurch gekennzeichnet,**
**dass** in einem Endbereich des Auslaufbereiches (10) der der Auslaufkante (8) gegenüberliegende Bereich geradlinig und der zur Auslaufkante hin verlaufende Wandabschnitt konvex gekrümmt verläuft.

10. Modulares Bohrwerkzeug (1) nach Anspruch 9,
**dadurch gekennzeichnet,**
**dass** in einem mittleren Teilbereich des Auslaufbereichs (10) die Spannut (6) gegenüberliegende und nach außen geradlinig auslaufende Wandabschnitte aufweist, die insbesondere parallel zueinander liegen und dazwischen über eine Kreisbahn verbunden sind.

11. Verfahren zum Herstellen eines modularen Bohrwerkzeugs (1), das einen im Wesentlichen kreiszylindrischen, sich entlang einer Tragkörperlängsachse (Z) erstreckenden und einen Tragkörperradius (r) aufweisenden Tragkörper (2), eine an diesem befestigbare Schneideinheit (16) sowie eine Spannut (6) und eine entlang der Spannut (6) verlaufende Auslaufkante (8) aufweist, wobei mit Hilfe eines Fräsers die Spannut (6) bearbeitet wird, so dass - im Querschnitt senkrecht zur Tragkörperlängsachse (Z) gesehen - die Spannut (6) J-förmig ausgebildet wird derart, dass ein der Auslaufkante (8) gegenüberliegender Wandabschnitt (19) der Spannut (6) geradlinig ausläuft und dass die Spannut (6) zur Auslaufkante (8) hin konvex gekrümmt verläuft und eine Hohlkehle gebildet wird, so dass zwischen einer Spannuttangente (T) an der Auslaufkante (8) und einer den Nutgrund im Bereich der Hohlkehle an einem Tangentenpunkt (P) tangierenden Radialen (R) ein spitzer Vorlaufwinkel (W) ausgebildet wird, wobei in einem Auslaufbereich (10) der Spannut (6) der Fräser derart eingeschwenkt wird, dass der Vorlaufwinkel (W) in Richtung der Tragkörperlängsachse (Z) kontinuierlich abnimmt.

## Claims

1. Modular drilling tool (1) comprising a carrier body (2) and a cutting unit (16) which can be fastened thereto, wherein the carrier body (2) extends along a carrier body longitudinal axis (Z), is designed to be substantially circular cylindrical with a carrier body radius (Tᵣ) and has a chip groove (6) and an outlet edge (8) extending along the chip groove, wherein the chip groove (6) extends toward the outlet edge (8) in a convexly curved manner, **characterized in that** a wall section (19) of the chip groove (6) situated opposite to the outlet edge (8) runs out in a straight line, with the result that - as viewed in cross section perpendicular to the carrier body longitudinal axis (Z) - the chip groove (6) is bounded by a J-shaped chip groove wall (17) and a channel (18) is formed, with the result that an acute leading angle (W) is formed between a chip groove tangent (T) at the outlet edge (8) and a radial (R) which is tangential to the groove base in the region of the channel at a tangent point (P) and wherein the carrier body (2) has a front region (3), which extends in the direction of the carrier body longitudinal axis (Z), and an outlet region (10) adjoining this front region, wherein the leading angle (W) continuously decreases in the direction of the carrier body longitudinal axis (Z) in the outlet region (10).

2. Modular drilling tool (1) according to Claim 1, **characterized in that** the leading angle (W) is between 40° and 70°.

3. Modular drilling tool (1) according to Claim 1 or 2, **characterized in that** the chip groove (6) in the region of the channel (18) extends along a circular path having a radius of curvature (r).

4. Modular drilling tool (1) according to Claims 1 to 3, **characterized in that** the radius of curvature (r) lies approximately between 0.4 times and 0.6 times the carrier body radius (Tᵣ).

5. Modular drilling tool (1) according to one of Claims 1 to 4, **characterized in that** the channel has a channel width (B) which lies approximately between 0.6 times and 1.0 times the radius of curvature (r) and is defined by the distance between the tangent point (P) and a projection of the outlet edge (8) onto the radial (R).

6. Modular drilling tool (1) according to one of Claims 1 to 5, **characterized in that** the channel has a channel depth (H) approximately in the range of 0.3 times to 0.8 times the radius of curvature (r), wherein the channel depth (H) is determined by the distance between the outlet edge (8) and the radial (R).

7. Modular drilling tool (1) according to one of the preceding claims, **characterized in that** the leading angle (W) decreases to at least 0° in the outlet region (10).

8. Modular drilling tool (1) according to one the preceding claims and Claim 3 and claim 3, **characterized in that** the outlet region (10) has a length between 1.0 times and 2.0 times the radius of curvature (r).

9. Modular drilling tool (1) according to one of the preceding claims, **characterized in that**, in an end region of the outlet region (10), the region situated opposite to the outlet edge (8) extends in a straight line and the wall section extending toward the outlet edge extends in a convexly curved manner.

10. Modular drilling tool (1) according to Claim 9, **characterized in that**, in a central subregion of the outlet region (10), the chip groove (6) has mutually opposite wall sections which run out toward the outside in a straight line and which are particularly situated parallel to one another and are interconnected via a circular path.

11. Method for producing a modular drilling tool (1) which comprises a substantially circular cylindrical carrier body (2) which extends along a carrier body longitudinal axis (Z) and has a carrier body radius (Tᵣ), a cutting unit (16) which can be fastened to this carrier body and a chip groove (6) and an outlet edge (8) extending along the chip groove (6), wherein the chip groove (6) is machined with the aid of a milling cutter, with the result that - as viewed in cross section perpendicular to the carrier body longitudinal axis (Z) - the chip groove (6) is of J-shaped design such that a wall section (19) of the chip groove (6) situated opposite to the outlet edge (8) runs out in a straight line and that the chip groove (6) extends toward the outlet edge (8) in a convexly curved manner and a channel is formed, with the result that an acute leading angle (W) is formed between a chip groove tangent (T) at the outlet edge (8) and a radial (R) which is tangential to the groove base in the region of the channel at a tangent point (P), wherein, in an outlet region (10) of the chip groove (6), the milling cutter is pivoted such that the leading angle (W) continuously decreases in the direction of the carrier body longitudinal axis (Z).

## Revendications

1. Outil de perçage modulaire (1) avec un corps de support (2) et une unité de coupe (16) à fixer sur celui-ci, dans lequel le corps de support (2) s'étend le long d'un axe longitudinal de corps de support (Z), est réalisé sous une forme essentiellement cylindrique circulaire avec un rayon de corps de support (Tᵣ) et présente une rainure à copeaux (6) ainsi qu'une arête de sortie (8) s'étendant le long de la rainure à copeaux, dans lequel la rainure à copeaux (6) présente une courbure convexe vers l'arête de sortie (8), **caractérisé en ce qu'**une partie de paroi (19) de la rainure à copeaux (6) opposée à l'arête de sortie (8) se termine en ligne droite, de telle manière que - vue en section transversale perpendiculairement à l'axe longitudinal de corps de support (Z) - la rainure à copeaux (6) soit limitée par une paroi de rainure à copeaux en forme de J (17) et qu'il se forme une cannelure creuse (18), de telle manière qu'un angle d'avance aigu (W) soit formé entre une tangente à la rainure à copeaux (T) sur l'arête de sortie (8) et une radiale (R) tangente au fond de la rainure dans la région de la cannelure creuse en un point de tangence (P) et dans lequel le corps de support (2) présente une zone avant (3) s'étendant dans la direction de l'axe longitudinal du corps de support (Z) et une zone de sortie (10) se raccordant à celle-ci, dans lequel l'angle d'avance (W) diminue de façon continue en direction de l'axe longitudinal de corps de support (Z) dans la zone de sortie (10).

2. Outil de perçage modulaire (1) selon la revendication 1, **caractérisé en ce que** l'angle d'avance (W) vaut entre 40° et 70°.

3. Outil de perçage modulaire (1) selon la revendication 1 ou 2, **caractérisé en ce que** la rainure à copeaux (6) s'étend le long d'un tracé circulaire avec un rayon de courbure (r) dans la région de la cannelure creuse (18).

4. Outil de perçage modulaire (1) selon l'une quelconque des revendications 1 à 3, **caractérisé en ce que** le rayon de courbure (r) se situe environ entre 0,4 fois et 0,6 fois le rayon du corps de support (Tᵣ).

5. Outil de perçage modulaire (1) selon l'une quelconque des revendications 1 à 4, **caractérisé en ce que** la cannelure creuse présente une largeur de cannelure (B), qui se situe environ entre 0,6 fois et 1,0 fois le rayon de courbure (r) et qui est définie par la distance entre le point de tangence (P) et une projection de l'arête de sortie (8) sur la radiale (R).

6. Outil de perçage modulaire (1) selon l'une quelconque des revendications 1 à 5, **caractérisé en ce que** la cannelure creuse présente une profondeur de cannelure (H) située environ dans la plage de 0,3 fois à 0,8 fois le rayon de courbure (r), dans lequel la profondeur de cannelure (H) est déterminée par la distance entre l'arête de sortie (8) et la radiale (R).

7. Outil de perçage modulaire (1) selon l'une quelconque des revendications précédentes, **caractérisé en ce que** l'angle d'avance (W) diminue au moins jusque 0° dans la zone de sortie (10).

8. Outil de perçage modulaire (1) selon l'une quelconque des revendications précédentes et la revendication 3, **caractérisé en ce que** la zone de sortie (10) présente une longueur comprise entre 1,0 fois et 2,0 fois le rayon de courbure (r).

9. Outil de perçage modulaire (1) selon l'une quelconque des revendications précédentes, **caractérisé en ce que** la zone opposée à l'arête de sortie (8) s'étend en ligne droite dans une zone d'extrémité de la zone de sortie (10) et la partie de paroi s'étendant vers l'arête de sortie présente une courbure convexe.

10. Outil de perçage modulaire (1) selon la revendication 9, **caractérisé en ce que** la rainure à copeaux (6) présente, dans une zone partielle moyenne de la zone de sortie (10), des parties de paroi opposées et se terminant en ligne droite vers l'extérieur, qui sont en particulier parallèles l'une à l'autre et qui sont reliées entre celles-ci par un tracé circulaire.

11. Procédé de fabrication d'un outil de perçage modulaire (1), qui présente un corps de support (2) essentiellement cylindrique circulaire, s'étendant le long d'un axe longitudinal de corps de support (Z) et présentant un rayon de corps de support (Tᵣ), une unité de coupe (16) à fixer sur celui-ci ainsi qu'une rainure à copeaux (6) et une arête de sortie (8) s'étendant le long de la rainure à copeaux (6), dans lequel on usine la rainure à copeaux (6) à l'aide d'une fraise, de telle manière que - vue en section transversale perpendiculairement à l'axe longitudinal de corps de support (Z) - la rainure à copeaux (6) soit réalisée en forme de J, de telle manière qu'une partie de paroi (19) de la rainure à copeaux (6) opposée à l'arête de sortie (8) se termine en ligne droite et que la rainure à copeaux (6) présente une courbure convexe vers l'arête de sortie (8) et qu'il se forme une cannelure creuse, de telle manière qu'un angle d'avance aigu (W) soit formé entre une tangente à la rainure à copeaux (T) sur l'arête de sortie (8) et une radiale (R) tangente au fond de la rainure dans la région de la cannelure creuse en un point de tangence (P), dans lequel on incline la fraise dans une zone de sortie (10) de la rainure à copeaux (6) de telle manière que l'angle d'avance (W) diminue de façon continue en direction de l'axe longitudinal de corps de support (Z) .
